# FASCICULE DE BREVET EUROPEEN

(11) **EP 4 121 642 B1**
(45) Date de publication et mention de la délivrance du brevet: **07.02.2024**
(21) Numéro de dépôt: 21711558.3
(22) Date de dépôt: 15.03.2021
(51) Int. Cl.: F01N 11/00, F01N 3/20

(54) **PROCÉDÉ D'ÉVALUATION D'UN INTERVALLE DE SERVICE POUR LE REMPLACEMENT D'UN DISPOSITIF DE FILTRATION DE LIQUIDE AQUEUX D'UN VÉHICULE AUTOMOBILE**
VERFAHREN ZUR SCHÄTZUNG EINES SERVICEINTERVALLS ZUM ERSETZEN EINER WASSERFLÜSSIGKEITSFILTERVORRICHTUNG IN EINEM KRAFTFAHRZEUG
METHOD FOR ESTIMATING A SERVICE INTERVAL FOR REPLACING AN AQUEOUS LIQUID FILTRATION DEVICE IN A MOTOR VEHICLE

(30) Priorité: 18.03.2020 FR 2002623
(43) Date de publication de la demande: 25.01.2023
(73) Titulaire: Actblue Europe S.A R.L., 1736 Senningerberg (LU)
(72) Inventeur: FISCHBACH, Charles-Albert, 31100 TOULOUSE (FR); JACQUES, Romain, 31100 TOULOUSE (FR); LORENZON, Cédric, 31100 TOULOUSE (FR)
(74) Mandataire: Dennemeyer & Associates S.A.
(86) Numéro de dépôt international: PCT/EP2021/056492
(87) Numéro de publication internationale: WO 2021/185739

(56) Documents cités:
- DE-A1- 19 716 979
- DE-T5-112013 001 605
- FR-A1- 2 787 143
- US-A1- 2015 218 990

## Description

### [Domaine technique]

La présente invention se rapporte de manière générale aux systèmes d'extraction de liquide aqueux à partir d'un réservoir de véhicule automobile. Elle concerne plus particulièrement l'évaluation d'un intervalle de service pour le remplacement d'un dispositif de filtration d'un tel système d'extraction de liquide aqueux.

L'invention trouve des applications, en particulier, dans les systèmes de traitement des gaz d'échappement des véhicules automobiles équipés de moteurs diesel, par exemple dans des véhicules légers, des véhicules de type utilitaires ou dans des camions (ou véhicules poids lourds) comportant un tel moteur. Dans ces exemples d'applications, le liquide aqueux concerné est de l'additif liquide extrait d'un réservoir dédié et injecté dans le flux de gaz d'échappement pour dépolluer lesdits gaz d'échappement.

### [Etat de la technique antérieure]

Les gaz d'échappement générés par les véhicules à moteur à allumage par compression (dits moteurs diesel) ou par les véhicules à moteur à allumage commandé (dits moteurs essence), sont notamment composés de polluants atmosphériques gazeux tels que des oxydes de carbone (COx, mis pour CO et CO2) et des oxydes d'azote (NOx, mis pour NO et NO2). Les moteurs diesel, en particulier, font l'objet d'une réglementation visant à réduire la quantité de gaz polluants qu'ils émettent. Les normes plafonnant les niveaux d'oxydes d'azote émis en sont un exemple. Elles tendent à être de plus en plus restrictives.

Dans le cas des véhicules équipés d'un moteur diesel, où cela est déjà d'actualité, comme dans le cas des véhicules équipés d'un moteur essence, où cela pourrait le devenir prochainement, la dépollution des gaz d'échappement du moteur peut être réalisée au moyen d'un système de traitement des gaz mettant en oeuvre une méthode de dépollution telle que la méthode de réduction catalytique sélective ou méthode SCR (« *Selective Catalytic Reduction* » en langue anglo-saxonne). La méthode SCR emploie un additif liquide dépolluant afin de réduire sélectivement les oxydes d'azotes (NOx) contenus dans les gaz d'échappement. Par additif liquide dépolluant, on entend un produit dépolluant qui peut être injecté dans un dispositif de traitement de gaz d'échappement d'un moteur dans le but de dépolluer les gaz d'échappement avant leur rejet dans l'atmosphère.

L'additif liquide communément utilisé dans la méthode SCR est un liquide aqueux appelé « fluide d'échappement diesel » ou FED en français, ou DEF (mis pour « *Diesel Exhaust Fluid* ») dans la langue anglo-saxonne. Cet additif liquide est plus précisément une solution aqueuse d'urée à 32,5% (en masse), aussi commercialisée sous la marque AdBlue^{®}, qui est un précurseur de l'ammoniaque (NH3). Dans ce contexte, l'énergie thermique fournie par l'échappement est un catalyseur de la transformation du DEF en ammoniaque. L'ammoniaque réagit avec les oxydes d'azote (NOx) des gaz d'échappement pour donner des espèces moins polluantes, à savoir du diazote (N2), de l'eau et du dioxyde de carbone (CO2). Ainsi, l'ammoniaque utilisé dans la méthode SCR est un agent réducteur, fourni sous la forme d'un additif liquide.

Dans les véhicules équipés d'un système de traitement des gaz d'échappement, l'additif liquide est en général stocké dans un réservoir dédié. Il en est extrait par un système d'extraction qui comprend notamment une pompe adaptée pour le faire circuler dans un circuit hydraulique, avec un certain débit, jusqu'à un injecteur. Cet injecteur a pour fonction de pulvériser dans le flux de gaz d'échappement, sous forme de microgouttelettes, la bonne quantité d'additif, à chaque instant, sous la commande d'une unité de commande. L'unité de commande a pour fonction de doser la quantité d'additif à injecter en fonction des besoins réels du système de traitement des gaz d'échappement, et de commander l'injecteur en conséquence. Ce dosage et cette commande sont réalisés en fonction de paramètres tels que, par exemple, la température de l'additif liquide ou la pression hydraulique à un instant donné.

En plus de la pompe, un système d'extraction comprend en général au moins un dispositif de filtration de l'additif liquide. Le dispositif de filtration principal est situé en amont de la pompe dans le circuit hydraulique. Ainsi positionné, il réduit le risque que le liquide qui arrive à la pompe et, plus tard, à l'injecteur soit contaminé par des impuretés (par exemple de la poussière ou des particules en suspension). Une telle contamination pourrait en effet entraîner une détérioration des performances du système d'extraction et, plus largement, du système de traitement des gaz d'échappement dans son ensemble. Typiquement, pour les véhicules tout-terrain qui sont équipés d'un système de traitement des gaz d'échappement et utilisés hors route, par exemple une carrière d'extraction minière ou une zone de chantier, il est fréquent que l'additif liquide contenu dans le réservoir dédié soit contaminé par de telles impuretés. L'intégration d'un dispositif de filtration dans le système permet de maintenir le niveau de performance du système de traitement des gaz d'échappement pendant une durée optimale en dépit d'une éventuelle contamination du liquide par des impuretés.

Toutefois, il est connu que les performances des dispositifs de filtration eux-mêmes se détériorent au cours de leur utilisation. En particulier, au fur et à mesure du passage d'un flux de liquide contaminé à travers un dispositif de filtration, des impuretés peuvent s'accumuler au niveau dudit dispositif de filtration. Or, les performances du système de traitement des gaz d'échappement sont dégradées du fait de cet encrassement progressif, voire du colmatage du dispositif de filtration.

Ainsi, lorsqu'un dispositif de filtration a dépassé un certain niveau d'encrassement, il doit être démonté pour pouvoir être remplacé et permettre au système de traitement des gaz d'échappement de conserver un niveau de performance suffisant au regard des normes imposées.

Or, les opérations de démontage nécessaires au retrait du dispositif de filtration du système d'extraction peuvent être longues et fastidieuses. Elles impliquent en outre, la plupart du temps, une immobilisation du véhicule pendant une durée importante. Ainsi, dans un tel système d'extraction, la décision de procéder à un remplacement du dispositif de filtration est critique.

La pratique consiste pourtant à remplacer le dispositif de filtration en considération uniquement du temps absolu qui s'est écoulé depuis son dernier remplacement, ou de la quantité de fluide consommée par le système de traitement des gaz d'échappement. Le dépassement d'un seuil par l'une de ces informations de référence est considéré comme l'indication que le niveau d'encrassement du dispositif de filtration appelle son remplacement. Il ne s'agit cependant que d'un niveau d'encrassement supposé, car aucune mesure effective de l'encrassement réel du dispositif de filtration n'est réalisée, étant donné qu'aucune technique de mesure en conditions réelles d'utilisation du dispositif de filtration n'est connue, qui soit à la fois techniquement et économiquement faisable d'une part, et suffisamment fiable d'autre part.

Cependant, suivant le type de véhicule sur lequel est installé le système d'extraction de liquide et selon l'utilisation faite de ce véhicule, la vitesse à laquelle le dispositif de filtration est susceptible de s'encrasser est très variable. Ainsi, par exemple, un engin de chantier utilisé sur des zones de travaux ou des zones d'exploitation forestière ou minière est plus susceptible d'avoir des débris (terre, sable, poussière, etc.) admis dans le réservoir lors d'un remplissage sur site, qu'un camion de transport routier pour lequel les remplissages du réservoir de liquide sont effectués dans des stations-service dont l'état de propreté peut être beaucoup plus élevé. De même, un autobus de transports en commun utilisé en milieu urbain consomme beaucoup plus d'additif liquide pour le traitement des gaz d'échappement qu'un autocar touristique effectuant des trajets de longue distance à vitesse régulière sur autoroute.

Dit autrement, l'encrassement du dispositif de filtration n'est corrélé à la durée qui s'est écoulée depuis son dernier remplacement ou à la quantité de fluide consommée par le système l'incorporant, qu'en faisant des hypothèses très approximatives. Ces hypothèses ne sont en effet fondées que sur une durée d'utilisation moyenne et sur des conditions d'utilisation standards, relativement à un grand nombre de véhicules, possiblement le parc complet de véhicules utilisant un modèle donné de dispositif de filtration.

Par conséquent, les critères de décision du risque d'encrassement utilisés dans l'art existant sont statiques et universels, en ce sens qu'ils sont établis une fois pour toute et de la même façon pour tout un parc de véhicules. Il s'ensuit que la décision de remplacer un dispositif de filtration n'est prise, au cas par cas, que de manière relativement aléatoire au regard de la nécessité réelle de procéder à un tel remplacement compte tenu du niveau d'encrassement effectif du dispositif de filtration spécifiquement considéré.

En conséquence, des remplacements de dispositifs de filtration sont vraisemblablement effectués trop tôt, alors qu'ils pourraient être espacés dans le temps dans le souci de l'économie d'argent, de la limitation des périodes d'immobilisation des véhicules, et de la réduction du volume de dispositifs de filtration pollués à recycler. Inversement, des remplacements de dispositifs de filtration sont certainement effectués trop tard, alors que leur encrassement a déjà causé une dégradation des performances des systèmes de traitement des gaz d'échappement qui les incorporent avec pour conséquence dommageable une plus grande pollution de l'atmosphère par les véhicules concernés.

On connait le document US 2015/218990A1 qui_utilise un réservoir secondaire pour comparer un niveau de remplissage théorique de ce dernier au niveau de remplissage réel, mesuré à l'aide d'un capteur afin de déterminer la perméabilité du filtre.

On connait également le document FR2787143A1 qui se réfère à un procédé de détection d'encrassement d'un filtre à carburant, et qui consiste essentiellement à mesurer directement la perte de charge autour du filtre à partir d'un capteur de pression et d'un modèle de pompe de gavage basé sur les caractéristiques de vitesse et thermique de la pompe.

On connait en outre le document DE112013001605T5 qui se réfère à un procédé de détection de colmatage d'un filtre à carburant à partir de la surveillance de la tension d'un moteur électrique, et semble montrer que la détection de filtre bouché se fait à l'aide de la surveillance du courant d'alimentation de la pompe de gavage par rapport à un niveau standard.

On connait enfin le document DE19716979 A1 qui semble s'attacher à surveiller uniquement le delta p pour évaluer le colmatage du filtre à carburant.

### [Exposé de l'invention]

L'invention atténue les inconvénients de l'art antérieur précités et vise à améliorer les procédés existants, en proposant un procédé permettant d'évaluer dynamiquement et individuellement un intervalle de service pour le remplacement d'un dispositif de filtration d'un système d'extraction d'un liquide aqueux à partir d'un réservoir de véhicule automobile.

Par « intervalle de service », on entend une information qui indique à l'utilisateur que le moment est venu de procéder au remplacement du filtre. Si l'on considère la durée écoulée depuis la mise en place du filtre à remplacer jusqu'au moment où cette indication est donnée à l'utilisateur, l'intervalle de service est un intervalle de temps. Toutefois, l'homme du métier appréciera que l'information correspondant à l'intervalle de service pour le remplacement du filtre n'est pas, mathématiquement, homogène à une durée. C'est une information statistique, qui peut s'exprimer par exemple par une valeur normée entre 0 et 1, ou par un pourcentage entre 0 et 100% ce qui revient au même, et qui rend compte du risque d'encrassement du filtre à un moment donné. Dans les exemples précités, le risque serait par exemple minimum pour une valeur normée égale à 0 ou un pourcentage égal à 0%, et serait maximum pour une valeur normée égale à l'unité ou un pourcentage égal à 100%.

Plus particulièrement, un premier aspect de l'invention propose un procédé d'évaluation d'un intervalle de service pour le remplacement d'un dispositif de filtration d'un système d'extraction d'un liquide aqueux à partir d'un réservoir de véhicule automobile, en réponse au risque d'encrassement progressif dudit dispositif de filtration à raison de son usage, comprenant :
- la génération d'une valeur composite de décision du risque d'encrassement, basée sur la somme d'une pluralité de valeurs élémentaires du risque d'encrassement, au moins une desdites valeurs élémentaires étant liée à un critère de risque dépendant du fonctionnement du système d'extraction depuis la mise en service du dispositif de filtration ;
- la comparaison de la valeur composite de décision du risque d'encrassement à une valeur seuil ; et,
- la production d'une alerte en vue du remplacement du dispositif de filtration si la valeur composite du risque d'encrassement dépasse la valeur seuil,
dans lequel la pluralité de valeurs élémentaires du risque d'encrassement comprend :
- une valeur (k2) représentative du risque d'encrassement lié au volume de liquide pompé par la pompe depuis le dernier remplissage du réservoir, et
- une valeur (k3) représentative du risque d'encrassement lié au nombre de remplissages du réservoir depuis la mise en service du dispositif de filtration.

L'homme du métier appréciera que la décision de procéder au remplacement du dispositif de filtration demeure fondée sur une approche statistique, mais que le niveau de confiance associé à cette prise de décision est bien plus élevé qu'avec les critères de l'art antérieur. En effet, le remplacement du dispositif de filtration peut être effectué sur la base d'une valeur de décision du risque d'encrassement qui dépend du fonctionnement du système d'extraction, pour le véhicule spécifiquement considéré, depuis la mise en service du dispositif de filtration.

Le dispositif de filtration peut ainsi être utilisé pendant une durée optimale, c'est-à-dire ni trop courte, ni trop longue. Dit autrement, la mise en oeuvre du procédé permet de procéder au remplacement du dispositif de filtration sans anticipation inutile, ni retard hasardeux par rapport au risque de son encrassement effectif. En outre, dans des modes de mise en oeuvre, le procédé peut être configuré au préalable afin de s'adapter au type de véhicule sur lequel le système est installé, et/ou à ses conditions réelles d'utilisation.

Des modes de mise en oeuvre pris isolément ou en combinaison, prévoient en outre que :
- le système d'extraction peut comprendre en outre une pompe avec un premier port raccordé au réservoir par l'intermédiaire du dispositif de filtration et d'une conduite d'aspiration et un second port raccordé à un dispositif d'injection par l'intermédiaire d'une conduite de refoulement, ainsi qu'une conduite de retour raccordée à la conduite de refoulement par sa première extrémité et débouchant dans le réservoir par sa seconde extrémité, et le dispositif de filtration étant disposé du côté aspiration de la pompe, la pluralité de valeurs élémentaires du risque d'encrassement peut comprendre une valeur représentative du risque d'encrassement lié au volume de liquide pompé par la pompe depuis la mise en service du dispositif de filtration ;
- la pluralité de valeurs élémentaires du risque d'encrassement peut comprendre une valeur représentative du risque d'encrassement lié à la variation de la différence de pression du liquide de part et d'autre du dispositif de filtration ;
- une variation de la différence de pression du liquide de part et d'autre du dispositif de filtration peut être évaluée en fonction de la variation de vitesse de fonctionnement de la pompe à un point de fonctionnement donné ;

- une variation de la différence de pression du liquide de part et d'autre du dispositif de filtration peut être évaluée sous réserve qu'un volume de fluide minimum déterminé a été pompé par la pompe depuis la mise en service du dispositif de filtration ou depuis une évaluation précédente ;
- les valeurs élémentaires du risque d'encrassement peuvent être paramétrables en fonction du type de véhicule et/ou en fonction du type d'usage attendu du véhicule ;
- l'alerte en vue du remplacement du dispositif de filtration peut être affichée par l'intermédiaire d'une interface homme/machine du véhicule, pour indiquer à un utilisateur du véhicule la nécessité de remplacer le dispositif de filtration ; et/ou,
- l'alerte en vue du remplacement du dispositif de filtration peut être stockée dans une mémoire non volatile du véhicule, pour indiquer à un opérateur chargé de la maintenance du véhicule la nécessité de remplacer le dispositif de filtration.

Dans un deuxième aspect, l'invention a également pour objet un dispositif comprenant des moyens pour mettre en oeuvre toutes les étapes du procédé selon le premier aspect. Un tel dispositif peut être mis en oeuvre, en tout ou en partie, dans une unité de commande d'un système d'extraction d'un liquide d'un réservoir d'un véhicule automobile.

Dans un troisième aspect, l'invention a également pour objet un système d'extraction d'un liquide d'un réservoir d'un véhicule automobile comprenant une pompe et un dispositif de filtration, ladite pompe comportant un premier port raccordé au réservoir par l'intermédiaire du dispositif de filtration et d'une conduite d'aspiration et un second port raccordé à un dispositif d'injection par l'intermédiaire d'une conduite de refoulement, ledit système d'extraction comprenant en outre une conduite de retour raccordée à la conduite de refoulement par sa première extrémité et raccordée au réservoir par sa seconde extrémité, et un dispositif selon le deuxième aspect pour évaluer un intervalle de service pour le remplacement du dispositif de filtration.

Par exemple, ce système d'extraction peut être adapté pour extraire de l'additif liquide à partir d'un réservoir dédié d'un véhicule automobile et pour injecter ledit additif liquide dans un système de traitement des gaz d'échappement dudit véhicule automobile.

Un quatrième aspect de l'invention se rapporte à un système de traitement des gaz d'échappement d'un véhicule automobile, comportant un système d'extraction d'un liquide aqueux à partir d'un réservoir dudit véhicule automobile selon le troisième aspect ci-dessus.

Enfin, un cinquième et dernier aspect de l'invention se rapporte en outre à un produit programme d'ordinateur comprenant une ou plusieurs séquences d'instructions stockées sur un support de mémoire lisible par une machine comprenant un processeur, lesdites séquences d'instructions étant adaptées pour réaliser toutes les étapes du procédé selon le premier aspect de l'invention lorsque le programme est lu dans le support de mémoire et exécuté par le processeur.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
**[****Fig. 1****]** est un schéma fonctionnel d'un moteur de véhicule automobile avec un dispositif de traitement des gaz d'échappement pour la réduction des NOx ;
**[****Fig. 2****]** est une représentation schématique d'un système d'extraction d'un liquide d'un réservoir de véhicule automobile selon un mode de réalisation de l'invention ;
**[****Fig. 3****]** est un diagramme d'étapes d'un mode de mise en oeuvre du procédé d'évaluation d'un intervalle de service pour le remplacement d'un dispositif de filtration selon l'invention ;
**[****Fig. 4****]** est un diagramme d'étapes d'un mode de mise en oeuvre de la détermination d'une valeur élémentaire du risque d'encrassement liée au nombre de résultats négatifs, depuis la mise en service du dispositif de filtration, d'un test de variation de la dérive de pression du liquide en aval du dispositif de filtration effectué à des intervalles de temps déterminés.

### [Description des modes de réalisation]

Dans la description de modes de réalisation qui va suivre et dans les figures des dessins annexés, les mêmes éléments ou des éléments similaires portent les mêmes références numériques aux dessins.

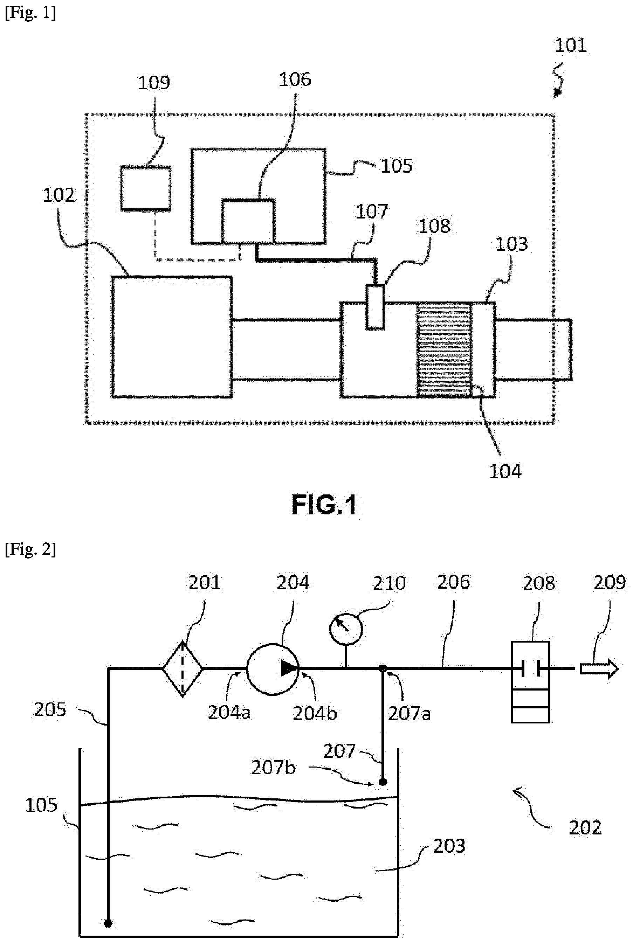

La **figure 1** montre schématiquement un véhicule à moteur 101 avec un moteur à combustion interne 102, par exemple un moteur diesel. Le véhicule à moteur 101 est par exemple une voiture de tourisme, un véhicule utilitaire, un camion ou un autocar. Le véhicule à moteur 101 comprend également un système de traitement des gaz d'échappement 103 avec un convertisseur catalytique (ou catalyseur) 104 pour la mise en oeuvre de la méthode de dépollution SCR. Le véhicule 101 comprend un réservoir 105 pour l'additif liquide. Le réservoir 105 est relié à un injecteur 108 pour pulvériser l'additif liquide dans le système de traitement des gaz 103, par l'intermédiaire d'un conduit 107. L'injecteur est alimenté en additif liquide sous pression par une pompe qui est par exemple intégrée à un module de dosage d'additif liquide 106 qui est localisé au niveau du réservoir 105.

Lorsque le moteur 102 fonctionne, il produit des gaz d'échappement et ces gaz sont dirigés vers le système de traitement des gaz d'échappement 103. Le système de traitement des gaz d'échappement 103 est alimenté en additif liquide grâce à un circuit hydraulique formé par la pompe intégrée au module 106, le conduit 107 et l'injecteur 108. L'injecteur 108 pulvérise la solution dépolluante en amont du catalyseur 104 afin de causer la réduction catalytique sélective des NOx selon la méthode SCR. La dépollution des gaz d'échappement est ainsi obtenue.

L'additif liquide est extrait du réservoir 105 et injecté dans le système de traitement des gaz d'échappement 103 uniquement lorsque cela est nécessaire, et uniquement en quantité nécessaire pour produire une réaction adaptée à la quantité de gaz d'échappement produite à chaque instant par le moteur 102 et pour éviter d'injecter de l'additif en excédent, potentiellement responsable d'une production d'ammoniaque excédentaire et d'une consommation d'additif liquide inutile. L'ensemble des opérations de dosage de l'additif liquide et de commande de la pompe sont pilotées par une unité de commande 109.

En référence à la **figure 2****,** nous allons maintenant décrire une représentation schématique d'un système d'extraction d'un liquide aqueux d'un réservoir de véhicule automobile selon un mode de réalisation de l'invention. Dans l'exemple représenté, le système d'extraction 202 est un circuit hydraulique qui a pour fonction de conduire de l'additif liquide dépolluant 203 depuis le réservoir 105 dans lequel il est stocké jusqu'à l'injecteur 208 qui le délivre, sous forme pulvérisée, à un système de traitement des gaz d'échappement ou un système de dépollution tel que celui représenté à la figure 1. L'homme du métier appréciera que, outre cet exemple particulier, un tel système d'extraction peut être utilisé pour extraire, d'un réservoir d'un véhicule automobile, un autre liquide aqueux destiné par exemple à être injecté après filtration dans un autre système, par un dispositif d'injection quelconque.

Dans l'exemple non-limitatif représenté, le liquide aqueux, par exemple du DEF vendu sous la marque Adblue^{®}, est stocké dans le réservoir 105 d'où il est extrait, par le système d'extraction 202, aux instants et en quantité nécessaires, pour être injecté dans le flux de gaz d'échappement au niveau du système de dépollution. Plus précisément, en configuration dite d'injection, le liquide aqueux 203 est entraîné par la pompe 204 depuis le réservoir 105, dans la conduite d'aspiration 205, puis à travers le dispositif de filtration 201 et la pompe 204 elle-même et ensuite, côté refoulement, dans la conduite de pression 206 jusqu'à l'injecteur 208. Le liquide situé entre la pompe et l'injecteur est donc du liquide sous pression. Le dispositif de filtration 201 est un dispositif de filtration classiquement utilisé pour filtrer les impuretés éventuellement présentes dans le liquide aqueux contenu dans le réservoir 105, ainsi qu'il a été décrit en introduction.

Les dispositifs d'injection comme l'injecteur 208 alternent des phases d'ouverture et des phases de fermeture plus ou moins rapides permettant la pulvérisation du liquide symbolisée par la flèche 209. De ce fait, une conduite de retour 207 forme une boucle fermée dans le système d'extraction pour réinjecter dans le réservoir le liquide mis sous pression lorsque l'injecteur est fermé. En particulier, une extrémité 207a de la conduite de retour 207 est raccordée à la conduite de pression 206 alors que l'autre extrémité 207b de la conduite de retour débouche dans le réservoir 105.

Le système d'extraction d'un liquide aqueux de la figure 2 comprend typiquement un capteur de pression 210 (manomètre), agencé en aval de la pompe 204 de manière à permettre de mesurer la pression dans la conduite de pression 206. Ceci permet de commander l'asservissement de la vitesse de fonctionnement de la pompe 204 afin d'atteindre et de maintenir un point de fonctionnement déterminé (i.e., une valeur de pression déterminée) sensiblement constant quelle que soit la commande de l'injecteur 208 qui consomme du liquide sous pression dans la conduite 206. L'excédent de liquide retourne, le cas échéant, au réservoir 105 par l'intermédiaire de la conduite de retour 207 qui est munie à cet effet d'un dispositif de type orifice calibré, ayant la fonction d'un limiteur de pression dans la conduite de pression.

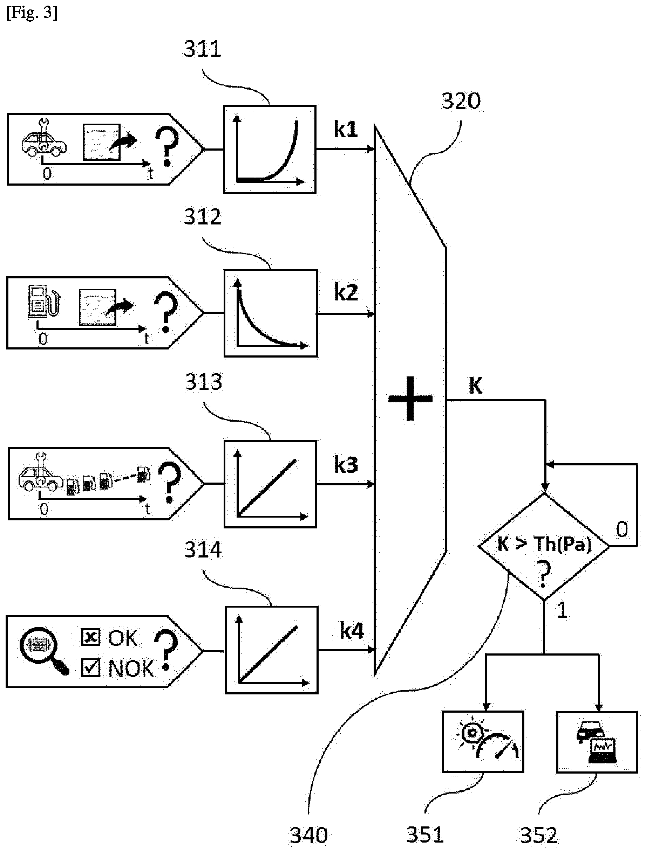

En référence au diagramme d'étapes de la **figure 3****,** nous allons maintenant décrire des modes de mise en oeuvre du procédé selon l'invention. Les étapes du procédé peuvent être exécutées par une unité de commande du système d'extraction. Dans un mode de réalisation particulier, il peut s'agir, par exemple, d'une unité de commande d'un module de dosage d'un système de traitement des gaz polluants d'un véhicule automobile, comme par exemple le module de dosage d'additif liquide 106 du véhicule 1 de la figure 1.

Le procédé permet la production d'une valeur de décision du risque d'encrassement d'un dispositif de filtration, ou filtre, d'un système. Dans des applications envisagées ici, le système est par exemple un système d'extraction 202 d'un liquide aqueux à partir d'un réservoir de véhicule automobile. Une telle valeur de décision est une valeur statistique par nature.

Néanmoins, contrairement à des valeurs de décision connues pour des applications identiques ou similaires qui sont déterminées une fois pour toute et de manière globale et identique pour tout un parc automobile, cette valeur de décision dépend du niveau d'encrassement effectif du dispositif de filtration spécifiquement considéré. En outre, elle est une valeur composite, en ce sens qu'elle résulte de la prise en compte d'une pluralité de valeurs élémentaires du risque d'encrassement, distinctes l'une de l'autre. Ces valeurs élémentaires du risque d'encrassement sont liées chacune à un critère de risque respectif, et dépendent du fonctionnement du système d'extraction depuis la mise en service du filtre considéré, c'est-à-dire depuis la mise en service du véhicule si le filtre est celui d'origine, ou depuis le dernier remplacement du filtre sinon. L'utilisation de cette valeur de décision du risque d'encrassement du filtre permet d'évaluer un intervalle de service pour effectuer le premier ou le prochain remplacement du filtre, respectivement, en réponse au risque d'encrassement progressif dudit filtre à raison de son usage.

Dans l'exemple représenté à la figure 3, la valeur composite de décision du risque d'encrassement, notée par la lettre *K,* est basée sur quatre valeurs élémentaires du risque d'encrassement, notées *k1, k2, k3* et k4, respectivement. Ces quatre valeurs élémentaires du risque d'encrassement *k1, k2, k3* et *k4* sont produites indépendamment l'une de l'autre, lors d'étapes respectives 311, 312, 313 et 314. L'invention n'entend pas, toutefois, être limitée par le nombre de valeurs élémentaires du risque d'encrassement qui sont prises en compte. D'autres modes de réalisation peuvent prendre en compte deux ou trois valeurs élémentaires du risque d'encrassement seulement, ou inversement plus de quatre telles valeurs, pour produire la valeur composite *K.*

En outre, dans l'exemple considéré ici et illustré par la figure 3, la valeur composite *K* est donnée par la somme, obtenue à l'étape 320 des valeurs élémentaires *k1, k2, k3* et *k4.* Par « somme », on entend la simple addition de quatre valeurs, au sens mathématique du terme. Dit autrement, dans cet exemple on a *K*=*k1*+*k2*+*k3*+*k4.* Cet exemple n'est toutefois pas imitatif. La valeur *K* peut aussi être obtenue à partir d'une somme pondérée des valeurs élémentaires du risque d'encrassement du filtre qui sont disponibles. Une telle somme pondérée ferait intervenir des valeurs de poids respectives, affectant chacune des valeurs élémentaires du risque d'encrassement. Avec des poids qui seraient au contraire identiques et inversement proportionnels au nombre total de valeurs élémentaires prises en compte, on obtiendrait une moyenne desdites valeurs élémentaires. Ces variantes sont mentionnées ici par souci d'éviter toute limitation indue des modes de mise en oeuvre du procédé, mais l'homme du métier appréciera à la lecture de ce qui va suivre que les effets d'une pondération ou d'une moyenne des valeurs élémentaires peuvent être obtenus d'une autre manière que par des calculs mathématiques, plus élégante, et qui permet à l'étape 320 de représenter une mise en oeuvre qui est la plus simple possible en termes de calculs nécessaires. Dit autrement, obtenir à l'étape 320 la valeur composite *K* à partir d'une simple addition des valeurs élémentaires *k1, k2, k3* et *k4* constitue la mise en oeuvre la moins gourmande en calculs, donc la plus simple et la plus efficace pour une application embarquée dans un véhicule automobile.

Avant de revenir plus en détail sur chacune des valeurs élémentaires *k1, k2, k3* et *k4* du risque d'encrassement du filtre, on poursuit la description des étapes du procédé avec la présentation de l'étape 340. A cette étape 340, la valeur composite *K* de décision du risque d'encrassement du filtre est comparée à un seuil de décision *Th* de valeur déterminée, afin de caractériser ou non l'existence d'un risque d'encrassement nécessitant un remplacement du filtre. Si le seuil de décision est dépassé, c'est-à-dire si *K*>*Th,* cela signifie que le risque d'encrassement du filtre est avéré. Le test de l'étape 340 peut être réalisé en continu, pendant le fonctionnement du véhicule. En réponse au dépassement éventuel du seuil de décision *Th* par la valeur composite de décision *K* du risque d'encrassement du filtre, des modes de mise en oeuvre comprennent la production d'une alerte en vue du remplacement du dispositif de filtration.

Par exemple, à l'étape 351, cette alerte peut être affichée par l'intermédiaire d'une interface homme/machine du véhicule, pour indiquer à un utilisateur du véhicule la nécessité de remplacer le dispositif de filtration. L'alerte peut ainsi prendre la forme de l'allumage d'un voyant lumineux correspondant, par exemple au niveau du tableau de bord du véhicule. Il peut également s'agir, en variante ou en complément, d'un message vocal restitué par un synthétiseur vocal, par exemple lors de l'arrêt du véhicule, après immobilisation complète du véhicule, afin de ne pas perturber le conducteur durant la conduite.

En variante ou en complément de l'étape 351, le procédé peut également comprendre une étape 352 dans laquelle l'alerte en vue du remplacement du dispositif de filtration est stockée dans une mémoire du véhicule, à savoir une mémoire non volatile. Ceci permet d'indiquer à un opérateur chargé de la maintenance du véhicule, lorsque ledit opérateur connecte au véhicule un outil de test qui est capable de lire cette mémoire, la nécessité de remplacer le dispositif de filtration. Ceci peut en effet apparaître dans un rapport de test généré par l'outil de test.

Dans des exemples de mise en oeuvre du procédé, la valeur du seuil de décision *Th* peut dépendre de la pression atmosphérique. En effet, plus la pression atmosphérique est élevée, et plus la différence de pression entre l'amont et l'aval d'un dispositif de filtration encrassé est élevée. Dit autrement, une pression atmosphérique élevée accentue la difficulté du liquide à traverser un filtre déjà sensiblement encrassé. C'est pourquoi on peut faire varier le seuil de décision *Th* en fonction de la pression ambiante *Pa.* A la figure 3, on écrit le seuil de décision sous la forme *Th(Pa)* au niveau du test de l'étape 340, pour exprimer que la valeur du seuil de décision *Th* dépend de la pression atmosphérique *Pa.* Dans un exemple de réalisation, la valeur *Th(Pa)* peut être donnée par une table de valeurs indexée (« *Look-up Table* », en anglais), en fonction d'une information représentative de la pression atmosphérique *Pa.*

Cette information peut être une information représentative de la pression ambiante mesurée localement par un capteur de pression disposé dans l'environnement immédiat du système d'extraction d'additif liquide. Il peut aussi s'agir d'une information relative à la pression atmosphérique mesurée par exemple dans le compartiment moteur du véhicule automobile, et qui peut être reçue par le module de commande qui implémente le procédé, depuis un autre calculateur du véhicule via un bus de communication par exemple. Dans un exemple, cet autre calculateur peut être le calculateur de contrôle moteur, qui dispose déjà de cette information via un capteur disposé dans le compartiment moteur. Le bus de communication peut être un bus CAN (de l'anglais (« *Controller Area Network* »)*.*

On va maintenant décrire plus en détail des exemples non limitatifs de valeurs élémentaires *k1, k2, k3* et *k4* du risque d'encrassement du dispositif de filtration qui peuvent être prise en compte pour composer la valeur composite *K* dudit risque. Chacune de ces valeurs élémentaires du risque d'encrassement correspond à un critère spécifique pour évaluer le risque d'encrassement global du filtre. Par « critère de risque » on désigne ici un critère préétabli sur lequel l'unité de commande qui exécute le procédé s'appuie pour estimer le risque global d'un encrassement du dispositif de filtration. Un tel critère peut, par exemple, être lié à la durée d'utilisation du dispositif de filtration, aux conditions d'utilisation du système d'extraction ou à toute autre information considérée comme pertinente pour estimer le risque d'encrassement du dispositif de filtration. Chacune des valeurs élémentaires *k1, k2, k3* et *k4* du risque d'encrassement apporte une contribution additive dans la valeur composite *K* du risque d'encrassement du filtre.

Un premier exemple *k1* de valeur élémentaire du risque d'encrassement du dispositif de filtration, peut être une valeur représentative du risque d'encrassement lié au volume de fluide pompé par la pompe 204 de la figure 2 depuis la mise en service du dispositif de filtration 201. On rappelle à cet égard, en référence à la figure 2, que la pompe 204 a un premier port 204a raccordé au réservoir 105 par l'intermédiaire du dispositif de filtration et d'une conduite d'aspiration 205 et un second port 204b raccordé à un dispositif d'injection 208 par l'intermédiaire d'une conduite de refoulement 206, ainsi qu'une conduite de retour 207 raccordée à la conduite de refoulement 206 par sa première extrémité 207a et débouchant dans le réservoir 105 par sa seconde extrémité 207b. Dit autrement, le dispositif de filtration 201 est disposé du côté aspiration de la pompe 204 du dispositif d'extraction. Ainsi disposé, il filtre tout le liquide qui est pompé par la pompe, que ce soit du liquide consommé par le dispositif d'injection 208 ou du liquide qui retourne dans le réservoir 105 par l'intermédiaire de la conduite de refoulement 207. Le liquide présent dans le réservoir est filtré en permanence, selon une configuration en boucle fermée des moyens de pompage et de filtration. Il s'ensuit que le volume de liquide filtré par le filtre, correspond au volume de liquide pompé par la pompe. Donc le risque d'encrassement du filtre dépend du volume de liquide pompé par la pompe depuis l'installation du filtre d'origine ou depuis le dernier remplacement du filtre, le cas échéant.

Dans un exemple de réalisation, l'information *k1* représentative du risque d'encrassement lié au volume de fluide pompé par la pompe depuis la mise en service du dispositif de filtration peut être donnée, à l'étape 311, par une table de valeurs indexée, en fonction du temps cumulé de fonctionnement de la pompe depuis cette mise en service. En effet, le volume de fluide pompé par la pompe est proportionnel à son temps de fonctionnement, à un rapport près qui correspond au débit théorique de la pompe. La table de valeurs indexée peut avantageusement prendre en compte la valeur du débit théorique de la pompe, à travers les valeurs effectivement contenues dans la table et indexées par l'information relative au temps de fonctionnement de la pompe depuis la mise en service du filtre. Ce temps est par exemple comptabilisé par un compteur du module de commande, en fonction des phases de fonctionnement et d'arrêt de fonctionnement du véhicule, et stocké dans une mémoire persistante du module de commande.

L'homme du métier appréciera que les effets de l'encrassement du filtre à raison du volume de fluide pompé par la pompe depuis la mise en service du filtre soient croissants avec le temps cumulé de fonctionnement de la pompe depuis cette mise en service, mais ne croissent pas de manière monotone. En effet, au début, c'est-à-dire lorsque le filtre est nouveau, le risque d'encrassement est faible, voire nul. Mais après un certain volume de liquide filtré, donc après une certaine durée de fonctionnement de la pompe, le risque d'encrassement se met à croître de manière exponentielle, jusqu'au colmatage du filtre. La forme de la réponse de la table de valeurs indexée en fonction du temps cumulé de fonctionnement de la pompe depuis la mise en service du filtre est représentée symboliquement dans le bloc représentant l'étape 311 à la figure 3.

Un deuxième exemple *k2* de valeur élémentaire du risque d'encrassement du dispositif de filtration, peut être une valeur représentative du risque d'encrassement lié au volume de fluide pompé par la pompe depuis le dernier remplissage du réservoir. On notera que, par remplissage, on n'entend pas ici forcément la mise à niveau maximum du réservoir, mais une opération ayant pour effet d'introduire du liquide nouveau dans le réservoir, que ce soit ou non en quantité suffisante pour emplir le réservoir à son niveau maximum. Ainsi, la valeur *k2* peut être déterminée même en l'absence d'un dispositif de mesure ou de saisie par l'utilisateur du volume de liquide ajouté lors d'un remplissage. Un capteur d'ouverture de la trappe de remplissage du réservoir suffit, car on peut raisonnablement faire l'hypothèse qu'un remplissage est effectivement réalisé à chaque fois que cette trappe est ouverte par l'utilisateur. En variante, une détection de la variation, i.e., de l'augmentation du niveau de liquide dans le réservoir par tout moyen approprié, par exemple à l'aide d'un traitement appliqué à un signal provenant d'un détecteur de niveau (jauge de niveau), peut remplacer la détection d'ouverture de la trappe de remplissage.

Dans un exemple de réalisation, la valeur élémentaire *k2* représentative du risque d'encrassement lié au volume de fluide pompé par la pompe depuis la mise en service du dispositif de filtration peut être donnée, à l'étape 312, par une table de valeurs indexée, en fonction du temps cumulé de fonctionnement de la pompe depuis le dernier remplissage, pour les mêmes raisons que celle données plus haut à propos de la valeur *k1*.

Toutefois, l'homme du métier appréciera que les effets de l'encrassement du filtre en raison de la réalisation d'un remplissage du réservoir soient décroissants avec le temps cumulé de fonctionnement de la pompe depuis ce remplissage. En effet, la pompe fonctionnant en cycle fermé avec retour au réservoir de la majorité du liquide pompé et filtré en continu (à la quantité de liquide consommée par l'injecteur près), l'augmentation de l'encrassement du filtre à raison de l'introduction dans le réservoir d'un complément de liquide éventuellement chargé d'impuretés, décroît avec le temps de fonctionnement de la pompe depuis ce remplissage. Cette décroissance est sensiblement exponentielle. La forme de la réponse de la table de valeurs indexée en fonction du temps cumulé de fonctionnement de la pompe depuis le dernier remplissage du réservoir est représentée symboliquement dans le bloc représentant l'étape 312 à la figure 3.

Un troisième exemple *k3* de valeur élémentaire du risque d'encrassement du dispositif de filtration, peut être une valeur représentative du risque d'encrassement lié au nombre de remplissages du réservoir depuis la mise en service du dispositif de filtration, déterminé à l'étape 313. On notera à nouveau ici que, par remplissage, on n'entend pas forcément la mise à niveau maximum du réservoir, mais une opération ayant pour effet d'introduire du liquide nouveau dans le réservoir, que ce soit ou non en quantité suffisante pour emplir le réservoir à son niveau maximum.

Dans un exemple de réalisation, la valeur élémentaire *k3* peut être donnée par un comptage du nombre d'ouvertures de la trappe de remplissage du réservoir, ces ouvertures étant détectées par le capteur d'ouverture de la trappe de remplissage déjà mentionné plus haut à propos de la valeur élémentaire *k2*.

L'homme du métier appréciera que l'augmentation qui est due à l'encrassement du dispositif de filtration est sensiblement proportionnelle au nombre de remplissages effectués depuis la mise en service du filtre. Dit autrement, l'évolution de la valeur *k3* en fonction du nombre de remplissages du réservoir depuis la mise en service du filtre est croissante, sensiblement linéaire et monotone. Cette évolution est représentée symboliquement par une droite montante et passant par zéro, dans le bloc représentant l'étape 313 à la figure 3.

Enfin, un quatrième et dernier exemple *k4* de valeur élémentaire du risque d'encrassement du dispositif de filtration, peut être une valeur représentative du risque d'encrassement lié à la différence de pression du liquide de part et d'autre du dispositif de filtration.

Idéalement, la variation de la différence de pression du liquide de part et d'autre du dispositif de filtration peut être mesurée à l'aide de capteurs de pression. En fait un seul capteur de pression placé entre le filtre 201 et la pompe 204 (figure 2) suffirait, puisqu'on peut faire l'hypothèse raisonnable que la pression en amont du filtre 201, dans la conduite d'aspiration, est égale à la pression du liquide dans le réservoir, donc est nulle. Cependant, l'ajout d'un capteur de pression spécifique pour cette fonction est difficilement acceptable d'un point de vue économique dans le contexte du secteur automobile, où le coût est toujours un facteur déterminant pour l'adoption ou non d'une amélioration à un dispositif existant.

C'est pourquoi, la différence de pression de part et d'autre du filtre peut avantageusement être évaluée en fonction de la variation de vitesse de fonctionnement de la pompe à un point de fonctionnement donné, *i.e.,* à une pression et/ou à un débit donné, voire éventuellement et en outre, à une température donnée. L'idée derrière cette disposition est la suivante : plus le filtre est encrassé, et plus la pompe doit tourner vite afin de maintenir le point de fonctionnement visé, dans la conduite de pression c'est-à-dire en aval de la pompe.

Par exemple, la valeur *k4* représentative du risque d'encrassement lié à la différence de pression du liquide de part et d'autre du dispositif de filtration peut être lue dans une table de valeurs prédéterminées (« *look-up table* » en anglais) qui est indexée par une valeur représentative de la variation de vitesse de fonctionnement de la pompe à un point de fonctionnement donné. Cela permet d'avoir une valeur *k4* représentative du risque d'encrassement du filtre pour toute variation de vitesse, une petite variation de vitesse de la pompe donnant une faible valeur *k4* représentative du risque d'encrassement voire une valeur *k4* nulle, alors qu'une grande variation de vitesse de la pompe donnant valeur *k4* représentative du risque d'encrassement plus élevée. Dit autrement, toute variation de la vitesse de la pompe peut indiquer une valeur *k4* représentative du risque d'encrassement du filtre.

Dans un mode de réalisation, une variation de la différence de pression du liquide de part et d'autre du dispositif de filtration est évaluée sous réserve qu'un volume de fluide minimum déterminé a été pompé par la pompe depuis la mise en service du dispositif de filtration ou depuis une évaluation précédente. Dans ce mode de réalisation, la valeur *k4* représentative du risque d'encrassement du filtre est fonction, à la fois, de la variation de la vitesse de la pompe entre deux évaluations de cette vitesse, et du volume de liquide pompé entre ces deux évaluations. Plus le volume pompé entre évaluations de la variation de la vitesse de la pompe est grand, plus la variation de vitesse tolérée est grande, et moins grande est valeur *k4* représentative du risque d'encrassement du filtre. Dit autrement, la courbe donnant la valeur *k4* représentative du risque d'encrassement du filtre a tendance à croitre en fonction de la variation de la vitesse de la pompe, mais à décroître en fonction du volume de liquide pompé entre deux évaluations de cette vitesse. Ainsi, une même différence de vitesse pour un volume de liquide pompé plus grand aura moins d'incidence que cette même différence de vitesse sur un volume de liquide pompé plus petit.

Dans une variante, la valeur *k4* représentative du risque d'encrassement lié à la différence de pression du liquide de part et d'autre du dispositif de filtration est liée au nombre de résultats négatifs, depuis la mise en service du dispositif de filtration, d'un test de la stabilité de la différence de pression du liquide de part et d'autre du dispositif de filtration effectué à intervalles de temps déterminés, réguliers ou non réguliers, depuis la mise en service du dispositif de filtration. L'idée derrière ce test est que plus le filtre est encrassé, et plus la quantité de liquide qu'il laisse passer est faible pour une force d'aspiration donnée, laquelle provient de l'action de la pompe. Donc l'augmentation de l'encrassement du filtre est la cause d'une augmentation de la variation de pression entre l'amont du filtre (qui est à la pression du liquide dans le réservoir, c'est-à-dire à pression nulle) et l'aval du filtre qui est à la pression de la conduite de pression 206 (figure 2).

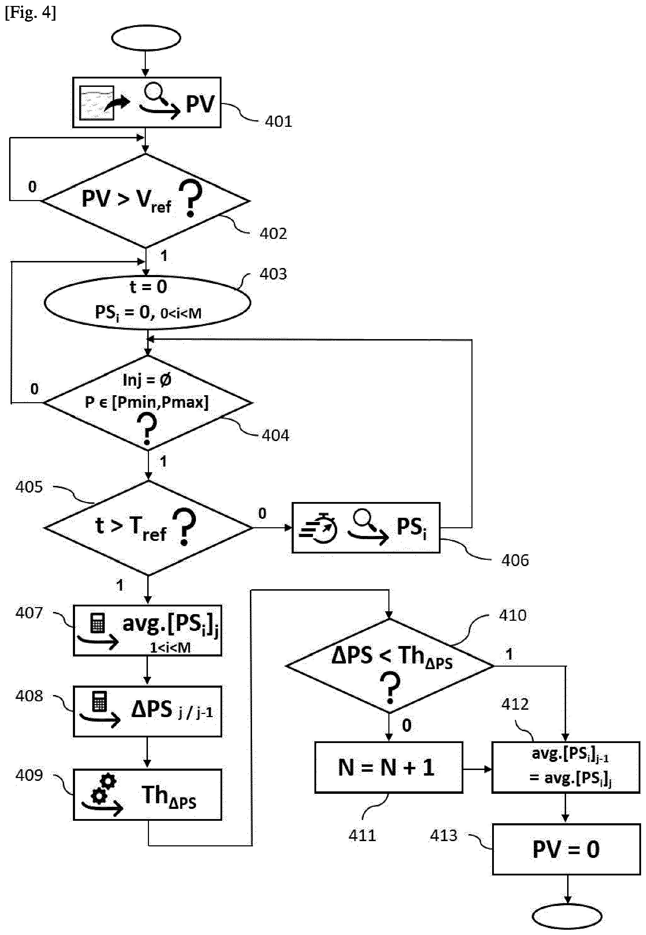

Des modes de mise en oeuvre de cette variante seront explosés, plus loin, en référence au diagramme d'étapes de la figure 4.

En réalisant un test de la stabilité de la différence de pression du liquide de part et d'autre du dispositif de filtration entre deux instants donnés, on peut déterminer si le filtre s'est encrassé entre ces deux instants : si le résultat du test est positif (*i.e*., si la différence de pression reste stable), alors le filtre ne s'est pas ou pas sensiblement encrassé entre les deux instants considérés ; si inversement le résultat du test de stabilité de la différence de pression est négatif (*i.e*., si la différence de pression a changé, en fait diminué) c'est que le filtre s'est sensiblement encrassé entre les deux instants considérés. L'homme du métier appréciera que plus le nombre de résultats négatifs du test est élevé, et plus cela indique que l'encrassement du filtre s'accroît. C'est pourquoi l'allure de l'évolution de la valeur *k4* en fonction du nombre de résultats négatifs du test est représentée symboliquement par une droite montante et passant par zéro, dans le bloc représentant l'étape 314 à la figure 3. En pratique, la courbe serait plus plate près de l'origine, traduisant un risque d'encrassement moindre pour des petites variations de la pression que pour une grande variation.

La sensibilité d'un test tel que défini ci-dessus n'est pas très élevée, en ce sens que pour être reflété par une variation détectable de la différence de pression de part et d'autre du filtre, l'encrassement du filtre doit être non négligeable (on peut dire qu'il doit être supérieur à un seuil de sensibilité donné). Dit autrement, il convient que le volume de liquide qui est passé à travers le filtre entre les deux instants précités soit supérieur à un seuil. Le fait de procéder à des tests plus fréquents, à des intervalles plus restreints, n'apporterait rien de plus. C'est pourquoi un tel test peut être effectué à chaque fois seulement qu'un volume de fluide déterminé est passé à travers le filtre, c'est-à-dire a été pompé par la pompe depuis la réalisation du dernier test. Pour le déterminer, le module de commande peut intégrer la valeur théorique du débit de la pompe dans le temps, sur la durée de fonctionnement de la pompe écoulée depuis la mise en service du filtre (pour le tout premier test qui est réalisé) ou depuis le dernier test réalisé (pour les tests suivants). En outre, la fréquence des tests n'a pas besoin d'être homogène sur la durée de fonctionnement de la pompe écoulée depuis la mise en service du filtre : en effet, au début le risque d'encrassement est faible, puis il croît exponentiellement à partir d'un certain volume pompé depuis la mise en service du filtre. C'est pourquoi le seuil auquel le volume de liquide pompé depuis la mise en service du filtre (pour le tout premier test qui est réalisé) ou depuis le dernier test réalisé (pour les tests suivants), peut être variable.

Les modes de mise en oeuvre évoqués ci-dessus, et d'autres, seront explicités plus bas en référence au diagramme d'étapes de la figure 4.

Toujours en référence à la figure 3 pour l'instant, l'homme du métier appréciera que les valeurs élémentaires *k1, k2, k3* et *k4* du risque d'encrassement du filtre peuvent avoir des incidences relatives différentes, de l'une à l'autre, dans la composition de la valeur composite *K* qui résulte de leur addition. Si la valeur composite *K* prend une valeur réelle entre 0 et 1, une répartition équitable de l'incidence des valeurs élémentaires *k1, k2, k3* et *k4* conduirait à laisser ces valeurs élémentaires évoluer chacune dans une dynamique comprise entre 0 et 0,25, alors qu'il est possible de « favoriser » l'une des valeurs élémentaires en lui donnant une dynamique supérieure à celles des autres valeurs élémentaires. Par exemple, si *k1, k2* et *k3* ont chacune une dynamique comprise entre 0 et 0,10 alors que *k4* a une dynamique comprise entre 0 et 0,70 (en sorte que la somme *K* de *k1, k2, k3* et *k4* ait une dynamique toujours comprise entre 0 et 1), alors la valeur élémentaire *k4* apporte une contribution relativement plus élevée et a donc une incidence relativement plus importante que les autres valeurs élémentaires *k1, k2* et *k3* dans la valeur composite finale *K.* Dit autrement, il est possible de donner des poids respectifs aux différentes valeurs élémentaires *k1, k2, k3* et *k4* du risque d'encrassement du filtre en leur conférant des dynamiques respectives qui leur sont propres. Plus généralement, chacun des valeurs élémentaires *k1, k2, k3* et *k4* est paramétrable à travers la dynamique qui lui est donnée. Un exemple d'utilisation de cette caractéristique consiste à paramétrer le dispositif d'évaluation du risque d'encrassement du filtre en fonction du type de véhicule et/ou en fonction du type d'usage attendu du véhicule, en choisissant des dynamiques respectives particulières pour les valeurs élémentaires. Par exemple, si le véhicule est un camion de chantier pour lequel les remplissages sont effectués sur un site de travaux à partir d'une citerne mobile, on pourra donner un poids relativement plus important à la valeur élémentaire *k3* que pour un camion de transport routier dont les remplissages du réservoir sont majoritairement effectués dans des stations-services sur des aires d'autoroute. En effet, le risque de faire rentrer des impuretés (poussière, sable, etc.) dans le réservoir à l'occasion d'un remplissage est plus élevé dans le premier cas que dans le second.

En outre, l'homme du métier appréciera que la valeur de la somme des valeurs élémentaires *k1, k2, k3* et *k4* du risque d'encrassement peut être limitée à une valeur maximale admissible pour la comparaison de la valeur composite *K* du risque d'encrassement à la valeur seuil *Th(Pa)* à l'étape 340, avant réalisation de ladite comparaison. Ceci peut être nécessaire dans le cas où la somme des dynamiques des valeurs élémentaires respectives *k1, k2, k3* et *k4* n'est pas bornée vers le haut, soit parce que l'une au moins des dynamiques respectives des valeurs élémentaires n'est pas bornée vers le haut, soit parce que le nombre de valeurs élémentaires prises en compte est variable sans ajustement de leurs dynamiques respectives destinées à faire en sorte que la dynamique de leur somme reste comprise entre 0 et 1. Ceci relève du savoir-faire de l'homme du métier de la programmation informatique, dans la mesure où les étapes du procédé sont mises en oeuvre par un programme d'ordinateur.

Le diagramme d'étapes de la **figure 4** illustre l'évaluation du quatrième critère de risque d'encrassement du dispositif de filtration, à savoir l'évaluation de la valeur composite *k4,* selon des modes de mise en oeuvre possibles. On rappelle que ce critère de risque est déterminé par une valeur liée au nombre de résultats négatifs, depuis la mise en service du dispositif de filtration, d'un test de stabilité de la différence de pression du liquide entre l'aval et l'amont du dispositif de filtration effectué à intervalles de temps déterminés, réguliers ou non.

Sur le diagramme de la figure 4, on utilise les acronymes et notations suivantes :
- *PV* désigne le volume de liquide aqueux pompé par la pompe 204 de la figure 1. Sa valeur est obtenue en intégrant la valeur du débit théorique de la pompe, sur le temps de fonctionnement de la pompe depuis une certaine origine. Cette origine correspond initialement à la mise en service du filtre, puis elle correspond à la réalisation d'un test selon la méthode qui va être décrite maintenant ;
- *V_{ref} désigne* un seuil de volume de liquide aqueux pompé par la pompe à partir duquel on peut effectuer un nouveau test, c'est-à-dire en dessous duquel un test n'aurait pas de pertinence significative eu égard au critère d'encrassement du filtre considéré ;
- *t* désigne le temps, compté à partir d'une référence temporelle déterminée, c'est-à-dire à partir d'un instant donné auquel cette variable *t* est initialisée à zéro ;
- *PSᵢ* désigne une valeur observée de la vitesse de la pompe, au sein d'une série de telles valeurs comprenant un nombre *M* de valeurs observées successivement, donc pour *i* compris entre 1 et *M* ;
- *P* désigne la valeur de la pression dans la conduite de pression 206. Le point de fonctionnement du système d'extraction de liquide est considéré comme stable si cette valeur est comprise entre une valeur minimum *Pmin* est une valeur maximum *Pmax* déterminées ;
- *T_{ref}* désigne un seuil de durée d'un état de stabilité du point de fonctionnement du système d'extraction, à partir duquel on peut effectuer une mesure valable de la vitesse de la pompe ;
- *ΔPS* ou *ΔPS*_{*j*/*j-1*}, désigne la variation de la vitesse de la pompe entre deux mesures successives *PSⱼ* et *PSⱼ₋₁* de cette vitesse, respectivement ;
- *Th_{ΔPS}* désigne un seuil de comparaison, avec lequel la variation de vitesse de la pompe est comparée afin de déterminer si le critère de stabilité de cette vitesse, et donc le critère de stabilité de la différence de pression de part et d'autre du filtre, est satisfait ou non. Dans un mode de réalisation, ce seuil *Th_{ΔPS}* dépend du volume de liquide filtré par la pompe depuis la mise en service de la pompe, afin de s'affranchir de phénomènes d'usure de la pompe qui peuvent avoir un effet sur sa vitesse de rotation qui n'est pas corrélé à la différence de pression de part et d'autre du filtre. Un tel phénomène d'usure peut être du, par exemple, à l'usure des paliers de l'axe de rotation de la pompe ; ou à tout autre usure des parties mécaniques et/ou électromagnétiques de la pompe comme l'isolation de ses enroulements ;
- N désigne le nombre d'échecs du test de stabilité de la différence de pression de part et d'autre du filtre. Ce nombre est incrémenté à chaque fois qu'un tel test donne un résultat négatif, c'est-à-dire à chaque fois que la variation de vitesse de la pompe ΔPS par rapport au dernier test précédemment effectué est supérieure au seuil *Th_{ΔPS}* ; et, enfin,
- avg désigne un opérateur mathématique « moyenne ».

En référence à la **figure 4****,** l'étape 401 du test de la variation de la pression de part et d'autre du filtre (ci-après le test) comprend l'estimation en continu du volume de liquide aqueux pompé par la pompe depuis le réservoir du véhicule automobile à travers le filtre, depuis l'initialisation ou la dernière réinitialisation de la valeur *PV* correspondante. L'initialisation de la valeur *PV* a lieu lors de la mise en service du filtre, et une réinitialisation a lieu à l'étape 413 (voir plus loin) à chaque fois qu'un test a été réalisé, qu'il ait donné un résultat positif ou négatif. La valeur *PV* est mesurée par intégration de la valeur du débit théorique de la pompe, sur le temps de fonctionnement de la pompe depuis l'initialisation ou la dernière réinitialisation de la valeur *PV.*

À l'étape 402, on compare l'initialisation ou la dernière réinitialisation de la valeur *PV* au seuil *Vref.* Le but de cette étape est de vérifier que le volume de liquide aqueux pompé par la pompe depuis l'initialisation ou la dernière réinitialisation de la valeur *PV* a dépassé le seuil à partir duquel on peut effectuer un nouveau test, qui ait une pertinence significative eu égard au critère d'encrassement du filtre considéré.

Dans l'affirmative, le processus se passe à l'étape 403 à laquelle le compteur de temps t mis ou remis à zéro afin de démarrer un nouveau test, et à laquelle, le cas échéant, toutes les valeurs *PSᵢ* pour *i* compris entre 1 et *M* qui avait été déterminées lors d'un test précédent, sont remises à zéro.

Ensuite, à l'étape 404, on vérifie l'absence d'injection 209 d'additif liquide par l'injecteur 208 dans le système de traitement des gaz d'échappement, à partir de la conduite sous pression 206 (voir figure 2). Le but de cette vérification est de s'assurer que le système d'extraction de liquide fonctionne en boucle fermée, avec tout le liquide pompé depuis le réservoir qui retourne au réservoir, aucune portion de ce liquide n'étant consommée par l'injecteur 208.

À la même étape 404, on vérifie en outre que la pression dans la conduite de pression est stable, c'est-à-dire qu'elle est comprise dans l'intervalle [*Pmin, Pmax*]. Ceci peut être vérifié en mesurant la pression dans la conduite de pression avec le capteur de pression 210.

Si l'une ou l'autre des deux conditions ci-dessus qui sont évaluées à l'étape 404 n'est pas vérifiée, cela signifie que le point de fonctionnement de la pompe n'est pas stable, et que le test ne donnera pas de résultat probant relativement au critère d'encrassement du filtre considéré. C'est pourquoi dans ce cas, le processus reboucle sur l'étape 403 ou le compteur *t* et les mesures *PSᵢ* sont réinitialisées. Sinon, le compteur de temps *t* s'incrémente régulièrement.

À l'étape 405, on vérifie que le temps *t* écoulé depuis que le système d'extraction de liquide est un point de fonctionnement stable est supérieur est la durée seuil *Tref.* Tant que cela n'est pas le cas, on procède à l'étape 406 à la mesure d'une valeur *PSᵢ* de la vitesse de la pompe, qui est mémorisée. Dit autrement, on accumule des valeurs *PSᵢ* jusqu'à obtenir un nombre *M* de valeurs *PSᵢ*, (i.e., jusqu'à ce que *i*=*M*) à la fin de l'intervalle de temps *Tref.*

Lorsque la durée *Tref* est écoulée, la vérification de l'étape 405 donne un résultat positif et, à l'étape 407, on calcule alors la moyenne des M valeurs *PSi* accumulées, c'est à dire la moyenne des valeurs *PSᵢ*, pour i allant de 1 à *M.* le but de cette moyenne est de lisser les mesures de la vitesse de la pompe réalisée lors de chaque itération de l'étape 406 afin de s'affranchir de tout phénomène isolé. Un tel phénomène isolé peut être, par exemple, un point dur de l'axe de rotation de la pompe occasionnant une chute éphémère de la pression dans la conduite de pression 206, ou tout autre phénomène aléatoire de ce type ayant un effet sur la vitesse de rotation de la pompe et où sur la pression dans la conduite de pression.

À l'étape 408, on peut alors effectuer le calcul de la différence *ΔPS* ou *ΔPS*_{*j*/*j-1*} entre la valeur moyenne de la vitesse de la pompe qui vient d'être calculée à l'étape 407 (*PSⱼ*) et la valeur moyenne de la vitesse de la pompe qui avait été calculée lors de de l'itération précédente du test (*PSⱼ₋₁*).

On est alors capable de comparer cette différence *ΔPS* avec le seuil *Th_{ΔPS}*, à l'étape 410, afin de déterminer si le critère de stabilité de la vitesse de rotation de la pompe, et donc le critère de stabilité de la différence de pression de part et d'autre du filtre, est satisfait ou non. Dans un mode de réalisation, à l'étape 409, le seuil *Th_{ΔPS}* est déterminé en fonction du volume PV pompé entre deux tests.

Si la différence de vitesse de la pompe *ΔPS* est inférieure au seuil *Th_{ΔPS}* (*ΔPS*<*Th_{ΔPS}*), alors le test de stabilité de la différence de pression de part et d'autre du filtre est considéré comme réussi. Dit autrement, on note que la différence de pression n'a pas varié de manière significative, ce qui indique que le filtre de n'est pas encrassé de manière significative depuis le dernier test réalisé. Dans ce cas, à l'étape 412 la valeur moyenne courante *PSⱼ* de la vitesse de la pompe qui a été calculée à l'étape 407 remplace la valeur moyenne *PSⱼ₋₁* qui avait été calculée lors de l'itération précédente du test, en vue de la prochaine itération du test, et, en outre, à l'étape 413, la valeur *PV* du volume de liquide pompé est réinitialisée, et le test est terminé. Un autre test peut être entamé en rebouclant sur l'étape 401, en sorte d'attendre qu'un nouveau volume *V_{ref}* de liquide ait été pompé.

Si inversement la différence de vitesse de la pompe *ΔPS* est supérieure au seuil *Th_{ΔPS}* (*ΔPS*>*Th_{ΔPS}*), alors le test de stabilité de la différence de pression de part et d'autre du filtre est considéré comme ayant échoué. Dit autrement, on note que la différence de pression a sensiblement varié, ce qui indique que le filtre s'est encrassé de manière significative depuis le dernier test réalisé. Dans ce cas, à l'étape 411, le compte N de tests échoués est incrémenté (*N*=*N*+*1*)*.* En outre, l'étape 412 est également réalisée en sorte que la valeur moyenne courante *PSⱼ* de la vitesse de la pompe qui a été calculée à l'étape 407 remplace la valeur moyenne *PSⱼ₋₁* qui avait été calculée lors de l'itération précédente du test, en vue de la prochaine itération du test. Puis le processus passe aussi à l'étape 413 de réinitialisation de la valeur PV du volume de liquide pompé depuis le dernier test, et le test est terminé. Un autre test peut être entamé en rebouclant sur l'étape 401, en sorte d'attendre qu'un nouveau volume *V_{ref}* de liquide ait été pompé.

L'invention a été décrite dans ce qui précède dans le cadre de modes de réalisation non limitatifs. L'homme du métier appréciera, notamment, que les critères de risque respectivement associés aux valeurs élémentaires *k1, k2, k3* et *k4* présentées dans l'exposé qui précède sont des exemples non-limitatifs. L'homme du métier saura choisir d'autres critères qu'il considère pertinents pour estimer le risque global d'un encrassement du dispositif de filtration. Ainsi, avantageusement, le nombre et le type de critère de risque utilisés peut être adapté à un cas d'usage spécifique d'un système de filtration de liquide et plus largement d'un système d'extraction de liquide pour tenir compte des conditions réelles de son utilisation. Dit autrement, les conditions de déclenchement des étapes du procédé sont paramétrables par un utilisateur selon l'usage attendu du véhicule dans lequel le système d'extraction de liquide est installé.

De plus, dans un mode de mise en oeuvre particulier, un poids déterminé (au sens mathématique, c'est-à-dire un coefficient de pondération) peut être respectivement associé à chaque critère de risque *k1, k2, k3* et *k4* et la détection d'un encrassement du dispositif de filtration peut être réalisée sur la base des critères de risque pondérés par les poids respectivement associés à chaque critère de risque. En d'autres termes, la détection effective d'un encrassement du dispositif de filtration suppose que le cumul des valeurs pondérées des différents critères de risque observés soit suffisamment élevé (c'est-à-dire en étant supérieur à une valeur seuil). Ce système de pondération permet ainsi d'accorder plus ou moins d'importance relative aux différents critères de risque élémentaires utilisés pour détecter un encrassement du filtre. Là encore, avantageusement, les différents poids associés aux différents critères peuvent être paramétrés préalablement à l'utilisation du procédé de manière à adapter le plus précisément possible la détection d'un encrassement à un cas d'usage spécifique du dispositif de filtration. Par exemple, selon que le véhicule dans lequel est implanté le système est destiné à être utilisé sur route ou non, les différents critères de risque peuvent avoir un impact différent sur les performances globales du système.

Dans un autre mode de mise en oeuvre, l'information associée à une nécessité de changement du dispositif de filtration peut être stockée dans une mémoire non volatile à des fins de diagnostic, et/ou une alerte peut être émise par l'intermédiaire d'une interface homme/machine du véhicule, indiquant une nécessité de remplacement du dispositif de filtration. Cette alerte peut être l'allumage d'un voyant ou l'émission d'un message visuel ou sonore. Cette alerte peut aussi prendre une forme graduée, en fonction de la valeur composite *K* du risque d'encrassement. Par exemple, la valeur *K* peut être affichée en pourcentage, donc entre 0 et 100%, en sorte que l'utilisateur peut lui-même décider de procéder ou non à un remplacement du filtre avant ou après que le seuil de 100 % soit atteint, en fonction de sa propre sensibilité au risque de dégradation des performances du système de traitement des gaz d'échappement associé à l'évaluation du risque d'encrassement du filtre qui est procurée par la mise en oeuvre de l'invention. En variante ou en complément, une information relative à la valeur *K* du risque d'encrassement du filtre peut être affichée avec un code couleur rendant compte du degré de risque : par exemple en vert pour une valeur *K* inférieure à 80%, en orange pour une valeur *K* comprise entre 80% et 90%, et en rouge pour une valeur *K* supérieure à 90%.

Dans les revendications, le terme "comprendre" ou "comporter" n'exclut pas d'autres éléments ou d'autres étapes. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Procédé d'évaluation d'un intervalle de service pour le remplacement d'un dispositif de filtration (201) d'un système d'extraction (202) d'un liquide aqueux (203) à partir d'un réservoir (105) de véhicule automobile, en réponse au risque d'encrassement progressif dudit dispositif de filtration à raison de son usage, comprenant :
- la génération d'une valeur composite de décision du risque d'encrassement, basée sur la somme d'une pluralité de valeurs élémentaires du risque d'encrassement, au moins une desdites valeurs élémentaires étant liée à un critère de risque dépendant du fonctionnement du système d'extraction depuis la mise en service du dispositif de filtration ;
- la comparaison de la valeur composite de décision du risque d'encrassement à une valeur seuil ; et,
- la production d'une alerte en vue du remplacement du dispositif de filtration si la valeur composite du risque d'encrassement dépasse la valeur seuil,
dans lequel la pluralité de valeurs élémentaires du risque d'encrassement comprend :
- une valeur (k2) représentative du risque d'encrassement lié au volume de liquide pompé par la pompe depuis le dernier remplissage du réservoir, et
- une valeur (k3) représentative du risque d'encrassement lié au nombre de remplissages du réservoir depuis la mise en service du dispositif de filtration.

2. Procédé selon la revendication 1 dans lequel, le système d'extraction comprenant en outre une pompe (204) avec un premier port (204a) raccordé au réservoir par l'intermédiaire du dispositif de filtration et d'une conduite d'aspiration (205) et un second port (204b) raccordé à un dispositif d'injection (208) par l'intermédiaire d'une conduite de refoulement (206), ainsi qu'une conduite de retour (207) raccordée à la conduite de refoulement par sa première extrémité (207a) et débouchant dans le réservoir par sa seconde extrémité (207b), et le dispositif de filtration étant disposé du côté aspiration de la pompe, la pluralité de valeurs élémentaires du risque d'encrassement comprend une valeur (k1) représentative du risque d'encrassement lié au volume de liquide pompé par la pompe depuis la mise en service du dispositif de filtration.

3. Procédé selon l'une quelconque des revendications 1 ou 2, dans lequel la pluralité de valeurs élémentaires du risque d'encrassement comprend une valeur (k4) représentative du risque d'encrassement lié à la variation de la différence de pression du liquide de part et d'autre du dispositif de filtration.

4. Procédé selon la revendication 3, dans lequel une variation de la différence de pression du liquide de part et d'autre du dispositif de filtration est évaluée en fonction de la variation de vitesse de fonctionnement de la pompe à un point de fonctionnement donné.

5. Procédé selon la revendication 3 ou la revendication 4, dans lequel une variation de la différence de pression du liquide de part et d'autre du dispositif de filtration est évaluée sous réserve qu'un volume de fluide minimum déterminé a été pompé par la pompe depuis la mise en service du dispositif de filtration ou depuis une évaluation précédente.

6. Procédé selon la revendication 5, dans lequel les valeurs élémentaires du risque d'encrassement sont paramétrables en fonction du type de véhicule et/ou en fonction du type d'usage attendu du véhicule.

7. Procédé selon l'une quelconque des revendications 1 à 6, dans lequel l'alerte en vue du remplacement du dispositif de filtration est affichée par l'intermédiaire d'une interface homme/machine du véhicule, pour indiquer à un utilisateur du véhicule la nécessité de remplacer le dispositif de filtration.

8. Procédé selon l'une quelconque des revendications 1 à 7, dans lequel l'alerte en vue du remplacement du dispositif de filtration est stockée dans une mémoire non volatile du véhicule, pour indiquer à un opérateur chargé de la maintenance du véhicule la nécessité de remplacer le dispositif de filtration.

9. Unité de commande d'un système d'extraction (202) d'un liquide (203) d'un réservoir (105) d'un véhicule automobile, comprenant des moyens pour mettre en oeuvre toutes les étapes du procédé selon l'une quelconque des revendications 1 à 8.

10. Système d'extraction (202) d'un liquide aqueux (203) à partir d'un réservoir (105) de véhicule automobile comprenant une pompe (204) et un dispositif de filtration (201), ladite pompe comportant un premier port (204a) raccordé au réservoir par l'intermédiaire du dispositif de filtration et d'une conduite d'aspiration (205) et un second port (204b) raccordé par l'intermédiaire d'une conduite de refoulement (206) à un dispositif d'injection de liquide apte à consommer le liquide extrait du réservoir, ledit système d'extraction comprenant en outre une conduite de retour raccordée à la conduite de refoulement par sa première extrémité et raccordée au réservoir par sa seconde extrémité, ainsi qu'une unité de commande selon la revendication 9 pour évaluer un intervalle de temps de service pour le remplacement du dispositif de filtration.

11. Système d'extraction selon la revendication 10, ledit système d'extraction étant adapté pour extraire de l'additif liquide à partir d'un réservoir dédié d'un véhicule automobile et pour injecter ledit additif liquide dans un système de traitement des gaz d'échappement dudit véhicule automobile.

12. Système de traitement des gaz d'échappement d'un véhicule automobile (1), comportant un système d'extraction d'un liquide aqueux (203) à partir d'un réservoir (105) dudit véhicule automobile selon la revendication 11.

13. Produit programme d'ordinateur comprenant une ou plusieurs séquences d'instructions stockées sur un support de mémoire lisible par une machine comprenant un processeur, lesdites séquences d'instructions étant adaptées pour réaliser toutes les étapes du procédé selon l'une quelconque des revendications 1 à 8 lorsque le programme est lu dans le support de mémoire et exécuté par le processeur.

## Patentansprüche

1. Verfahren zur Ermittlung eines Serviceintervalls für den Austausch einer Filtervorrichtung (201) eines Systems zur Entnahme (202) einer wässrigen Flüssigkeit (203) aus einem Behälter (105) eines Kraftfahrzeugs als Reaktion auf die Gefahr einer fortschreitenden Verunreinigung der Filtervorrichtung aufgrund seiner Verwendung, umfassend:
- das Erzeugen eines zusammengesetzten Entscheidungswerts der Verunreinigungsgefahr, basierend auf der Summe aus einer Vielzahl mehrerer Elementarwerte der Verunreinigungsgefahr, wobei mindestens einer dieser Elementarwerte mit einem Gefahrenkriterium in Abhängigkeit vom Betrieb des Entnahmesystems seit der Inbetriebnahme der Filtervorrichtung verbunden ist;
- das Vergleichen des zusammengesetzten Entscheidungswerts der Verunreinigungsgefahr mit einem Schwellenwert; und
- das Ausgeben einer Warnung im Hinblick auf den Austausch der Filtervorrichtung, wenn der zusammengesetzte Wert der Verunreinigungsgefahr den Schwellenwert überschreitet,
wobei die Vielzahl von Elementarwerten der Verunreinigungsgefahr umfasst:
- einen Wert (k2), der für die Verunreinigungsgefahr im Zusammenhang mit dem von der Pumpe seit der letzten Befüllung des Behälters gepumpten Flüssigkeitsvolumen repräsentativ ist, und
- einen Wert (k3), der für die Verunreinigungsgefahr im Zusammenhang mit der Anzahl der Befüllungen des Behälters seit der Inbetriebnahme der Filtervorrichtung repräsentativ ist.

2. Verfahren nach Anspruch 1, wobei das Entnahmesystem ferner eine Pumpe (204) mit einem ersten Anschluss (204a) umfasst, der über die Filtervorrichtung und eine Saugleitung (205) mit dem Behälter verbunden ist, und einem zweiten Anschluss (204b), der über eine Druckleitung (206) mit einer Einleitvorrichtung (208) verbunden ist, sowie einer Rücklaufleitung (207), die mit ihrem ersten Ende (207a) mit der Druckleitung verbunden ist und über ihr zweites Ende (207b) in den Behälter mündet, und wobei die Filtervorrichtung auf der Saugseite der Pumpe angeordnet ist, wobei die Vielzahl der Elementarwerte der Verunreinigungsgefahr einen Wert (*k1*) umfasst, der für die Verunreinigungsgefahr im Zusammenhang mit dem von der Pumpe gepumpten Flüssigkeitsvolumen seit der Inbetriebnahme der Filtervorrichtung repräsentativ ist.

3. Verfahren nach einem der Ansprüche 1 oder 2, wobei die Vielzahl der Elementarwerte der Verunreinigungsgefahr einen Wert (*k4*) umfasst, der für die Verunreinigungsgefahr im Zusammenhang mit der Änderung des Druckunterschieds der Flüssigkeit auf beiden Seiten der Filtervorrichtung repräsentativ ist.

4. Verfahren nach Anspruch 3, wobei eine Änderung des Druckunterschieds der Flüssigkeit auf beiden Seiten der Filtervorrichtung in Abhängigkeit von der Änderung der Betriebsgeschwindigkeit der Pumpe an einem gegebenen Betriebspunkt ermittelt wird.

5. Verfahren nach Anspruch 3 oder Anspruch 4, wobei eine Änderung des Druckunterschieds der Flüssigkeit auf beiden Seiten der Filtervorrichtung unter der Maßgabe ermittelt wird, dass seit der Inbetriebnahme der Filtervorrichtung oder seit einer vorangehenden Ermittlung ein bestimmtes Fluidmindestvolumen von der Pumpe gepumpt wurde.

6. Verfahren nach Anspruch 5, wobei die Elementarwerte der Verunreinigungsgefahr in Abhängigkeit vom Fahrzeugtyp und/oder in Abhängigkeit von der erwarteten Nutzungsart des Fahrzeugs einstellbar sind.

7. Verfahren nach einem der Ansprüche 1 bis 6, wobei die Warnung im Hinblick auf den Austausch der Filtervorrichtung über eine Mensch-Maschine-Schnittstelle des Fahrzeugs angezeigt wird, um einem Benutzer des Fahrzeugs die Notwendigkeit des Austauschs der Filtervorrichtung anzuzeigen.

8. Verfahren nach einem der Ansprüche 1 bis 7, wobei die Warnung im Hinblick auf den Austausch der Filtervorrichtung in einem nichtflüchtigen Speicher des Fahrzeugs gespeichert wird, um einem mit der Wartung des Fahrzeugs beauftragten Bediener die Notwendigkeit des Austauschs der Filtervorrichtung anzuzeigen.

9. Steuereinheit eines Systems zur Entnahme (202) einer Flüssigkeit (203) aus einem Behälter (105) eines Kraftfahrzeugs, umfassend Mittel zur Durchführung aller Schritte des Verfahrens nach einem der Ansprüche 1 bis 8.

10. System zur Entnahme (202) einer wässrigen Flüssigkeit (203) aus einem Behälter (105) eines Kraftfahrzeugs, umfassend eine Pumpe (204) und eine Filtervorrichtung (201), wobei die Pumpe einen ersten Anschluss (204a) aufweist, der über die Filtervorrichtung und eine Saugleitung (205) mit dem Behälter verbunden ist, und einen zweiten Anschluss (204b), der über eine Druckleitung (206) mit einer Vorrichtung zum Einleiten von Flüssigkeit verbunden ist, die imstande ist, die aus dem Behälter entnommene Flüssigkeit zu verbrauchen, wobei das Entnahmesystem ferner eine Rücklaufleitung umfasst, die mit ihrem ersten Ende mit der Druckleitung verbunden ist und mit ihrem zweiten Ende mit dem Behälter verbunden ist, sowie eine Steuereinheit nach Anspruch 9 zur Ermittlung eines Servicezeitintervalls für den Austausch der Filtervorrichtung.

11. Entnahmesystem nach Anspruch 10, wobei das Entnahmesystem geeignet ist, flüssiges Additiv aus einem speziellen Behälter eines Kraftfahrzeugs zu entnehmen und das flüssige Additiv in ein Abgasbehandlungssystem des Kraftfahrzeugs einzuleiten.

12. System zur Behandlung der Abgase eines Kraftfahrzeugs (1), umfassend ein System zur Entnahme einer wässrigen Flüssigkeit (203) aus einem Behälter (105) des Kraftfahrzeugs nach Anspruch 11.

13. Rechnerprogrammprodukt, das eine oder mehrere Befehlssequenzen umfasst, die auf einem Speichermedium gespeichert sind, das von einer Maschine lesbar ist, die einen Prozessor umfasst, wobei die Befehlssequenzen geeignet sind, alle Schritte des Verfahrens nach einem der Ansprüche 1 bis 8 auszuführen, wenn das Programm aus dem Speichermedium ausgelesen und von dem Prozessor ausgeführt wird.

## Claims

1. A method for evaluating a service interval for replacing a filtration device (201) of a system (202) for extracting an aqueous liquid (203) from a tank (105) of a motor vehicle, in response to the risk of progressive clogging of said filtration device due to its use, comprising:
- generating a composite clogging risk decision value based on the sum of a plurality of elementary clogging risk values, at least one of said elementary values being linked to a risk criterion depending on the operation of the extraction system since the commissioning of the filtration device;
- comparing the composite clogging risk decision value with a threshold value; and,
- producing an alert for replacing the filtration device if the composite clogging risk value exceeds the threshold value,
wherein the plurality of elementary clogging risk values comprises:
- a value (*k2*) representing the clogging risk linked to the volume of liquid pumped by the pump since the last filling of the tank, and
- a value (*k3*) representing the clogging risk linked to the number of times the tank has been filled since the commissioning of the filtration device.

2. The method according to claim 1, wherein the extraction system further comprising a pump (204) with a first port (204a) connected to the tank via the filtration device and a suction line (205), and a second port (204b) connected to an injection device (208) via a delivery line (206), as well as a return line (207) connected to the delivery line by its first end (207a) and opening into the tank by its second end (207b), and the filtration device being arranged on the suction side of the pump, the plurality of elementary clogging risk values comprises a value (*k1*) representing the clogging risk linked to the volume of liquid pumped by the pump since commissioning of the filtration device.

3. The method according to any one of claims 1 or 2, wherein the plurality of elementary clogging risk values comprises a value (*k4*) representing the clogging risk linked to the variation in the pressure difference of the liquid on either side of the filtration device.

4. The method according to claim 3, wherein a variation in the pressure difference of the liquid on either side of the filtration device is evaluated as a function of the variation in the pump operating speed at a given operating point.

5. The method according to claim 3 or claim 4, wherein a variation in the pressure difference of the liquid on either side of the filtration device is evaluated provided that a determined minimum volume of fluid has been pumped by the pump since the filtration device was commissioned or since a previous evaluation.

6. The method according to claim 5, wherein the elementary clogging risk values can be parametrised according to the type of vehicle and/or according to the type of use expected for the vehicle.

7. The method according to any one of claims 1 to 6, wherein the alert for replacing the filtration device is displayed via a human-machine interface of the vehicle to indicate to a vehicle user the need to replace the filtration device.

8. The method according to any one of claims 1 to 7, wherein the alert for replacing the filtration device is stored in a non-volatile memory of the vehicle, to indicate to an operator responsible for the maintenance of the vehicle the need to replace the filtration device.

9. A control unit of a system (202) for extracting a liquid (203) from a tank (105) of a motor vehicle, comprising means for implementing all the steps of the method according to any one of claims 1 to 8.

10. A system for extracting (202) an aqueous liquid (203) from a motor vehicle tank (105), comprising a pump (204) and a filtration device (201), said pump comprising a first port (204a) connected to the tank via the filtration device and a suction line (205), and a second port (204b) connected via a delivery line (206) to an injection device of liquid capable of consuming the liquid extracted from the tank, said extraction system further comprising a return line connected to the delivery line by its first end and connected to the tank by its second end, as well as a control unit according to claim 9 to evaluate a service time interval for replacing the filtration device.

11. The extraction system according to claim 10, said extraction system being suitable for extracting liquid additive from a dedicated tank of a motor vehicle and for injecting said liquid additive into an exhaust gas treatment system of said motor vehicle.

12. An exhaust gas treatment system of a motor vehicle (1), comprising a system for extracting an aqueous liquid (203) from a tank (105) of said motor vehicle according to claim 11.

13. A computer program product comprising one or more sequences of instructions stored on a machine-readable memory medium comprising a processor, said sequences of instructions being suitable for carrying out all the steps of the method according to any one of claims 1 to 8 when the program is read from the memory medium and executed by the processor.
